(19) Europäisches Patentamt
European Patent Office
Office européen des brevets

(11) Publication number: **0 124 623**
**A1**

(12) # EUROPEAN PATENT APPLICATION

published in accordance with Art. 158(3) EPC

(21) Application number: **83903567.2**

(51) Int. Cl.$^3$: **H 05 H 1/24**

(22) Date of filing: **10.11.83**

Data of the international application taken as a basis:

(86) International application number:
**PCT/JP83/00403**

(87) International publication number:
**WO84/02049 (24.05.84 84/13)**

(30) Priority: **10.11.82 JP 197305/82**

(43) Date of publication of application:
**14.11.84 Bulletin 84/46**

(84) Designated Contracting States:
**DE FR GB**

(71) Applicant: **ABE, Kenju**
**1-22-9, Kokubunjidai Ebina-Shi**
**Kanagawa-Ken, 243(JP)**

(72) Inventor: **ABE, Kenju**
**1-22-9, Kokubunjidai Ebina-Shi**
**Kanagawa-Ken, 243(JP)**

(74) Representative: **Descourtieux, Philippe et al,**
**CABINET BEAU de LOMENIE 55 rue d'Amsterdam**
**F-75008 Paris(FR)**

(54) **METHOD OF GENERATING IONIZED GAS.**

(57) An ionized-gas generating method makes it possible to obtain an ionized gas which has a high ion concentration at a low temperature. The gas to be ionized, which is water vapor, or a mixture of a gas containing a slight quantity of ions and water vapor, is arranged to flow from an exhaust port (17) into a region where at least one of an electrical field and a magnetic field is artificially produced, such as an electric field produced between parallel conductors (13, 15) which are connected to the positive electrode of a DC power source and extend from south to north (in the direction perpendicular to the paper surface) and a conductor (16) which is connected to the negative electrode of the DC power source and extends parallel to the parallel conductors (13, 15), or the geomagnetic field, thereby easily ionizing the gas within the temperature range of water vapor, i.e., at a relatively low temperature, using the thermal molecular motion of the water vapor, the high-dielectric constant property of the included water and an amplifying action due to collision ionization within the gas. The resultant ionized gas can be utilized for M.H.D. power generation, E.H.D. power generation, etc.

13
14
15
16
17

F I G . 3

EP 0 124 623 A1

Croydon Printing Company Ltd.

# DESCRIPTION

## TITLE OF THE INVENTION

Method of Generating Ionized Gas.

## TECHNICAL FIELD

This invention relates to a method of generating plasma( ionized gas) using steam. More specifically it concerns method to produce plasma at relatively low temperatures.

## BACKGROUND ART

A conventional method commonly employed to produce plasma involves (1) utilization of the phenomenon of thermic ionization, i.e., placing the plasma-producing gas under conditions of super-high temperatures (e.g., 3.000 degrees K) where plasma is produced through collision of stirred particles. Under thismethod,, however,the combustion chamber has to be made of materials which can withstand such high temperatures. Since it is difficult to find materials which can withstand such high temperatures, a cooling device is usually installed outside the combustion chamber so that plasma may be produced at high temperatures while the chamber itself is cooled from outside, thus resulting in low combustion efficiency. Therefore, when plasma is produced in this way and is used as a working fluid for MHD (Magnetohydrodynamics) generation, not only the power generation unit but also pipes through which the plasma runs have to be built heat resistant as in the combustion chamber mentioned above, thus leading to low power generation efficiency and the scale of the systems becoming very large so as to offset the above low generation efficiency.

Another method of plasma production sometimes used to avoid such a high temperature environment involves (2) utilization of the corona discharge phenomenon, i.e., making the plasma producing gas collide with high energy particles. Under this method, high voltage electricity is charged to electrodes of the needle type or the nailhead type to obtain electric discharge. Thus the area receiving electric load is limited to the tips of the electrodes so that ion density becomes low and only a small amount of electric current is obtained. Therefore, as in the method (1) above, when the plasma produced in this way is used for EHD generation, for example, many unit generation systems have to be combined to obtain a capacity large for practical use.

This invention, in view of the above mentioned shortcomings accompanying the existing methods, offers a novel means of producing plasma of high ion density at relatively low temperatures, and intends to remove those bottlenecks lying in the way of applying plasma to a wide variety of uses.

DISCLOSURE OF INVENTION

This invention offers a method of producing plasma at relatively low temperatures through ionization of a plasma-producing gas by utilizing the following actions at work when electric fields and/or electromagnetic waves fields are formed: the thermo-molecular movement of water vapor; the high dierectric constant characteristic of water molecules; and the multiplication effect of ionization through collision taking place in the above fields and while proceeding through those fields. For the plasma-producing gas, either steam or a combination of steam and a gas containing a small amount of ions is used. Under this method, ionization takes place as the plasma-producing gas goes through an area where at least one of these two fields is formed:electric field and field of electromagnetic waves.

BRIEF DESCRIPTION OF DRAWINGS

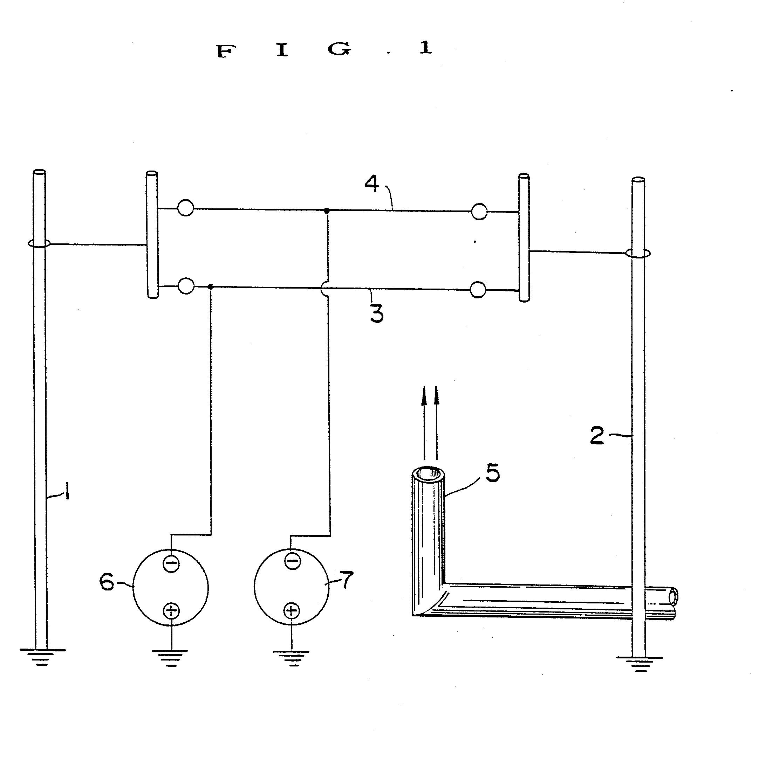

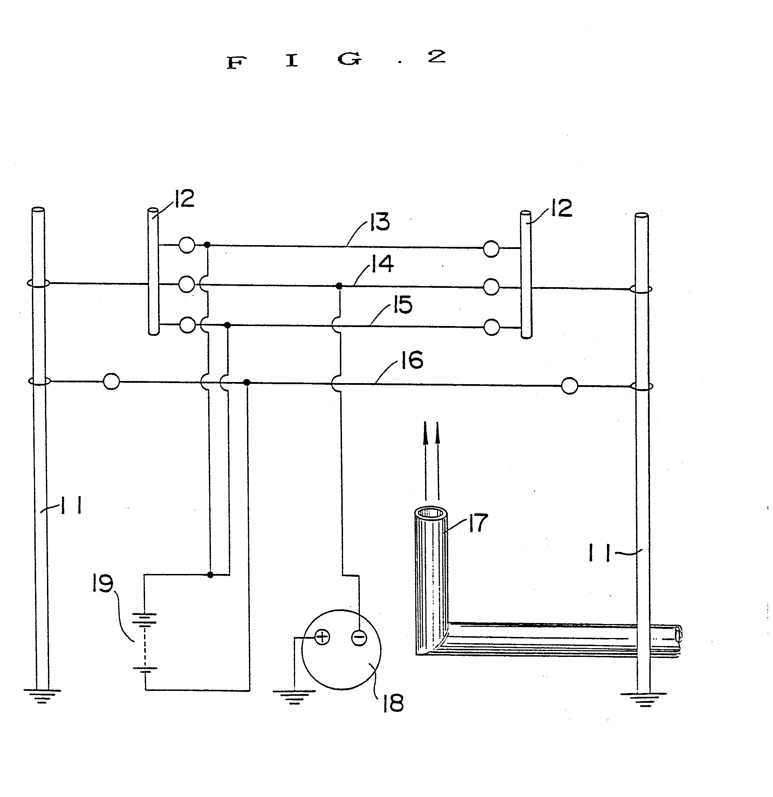

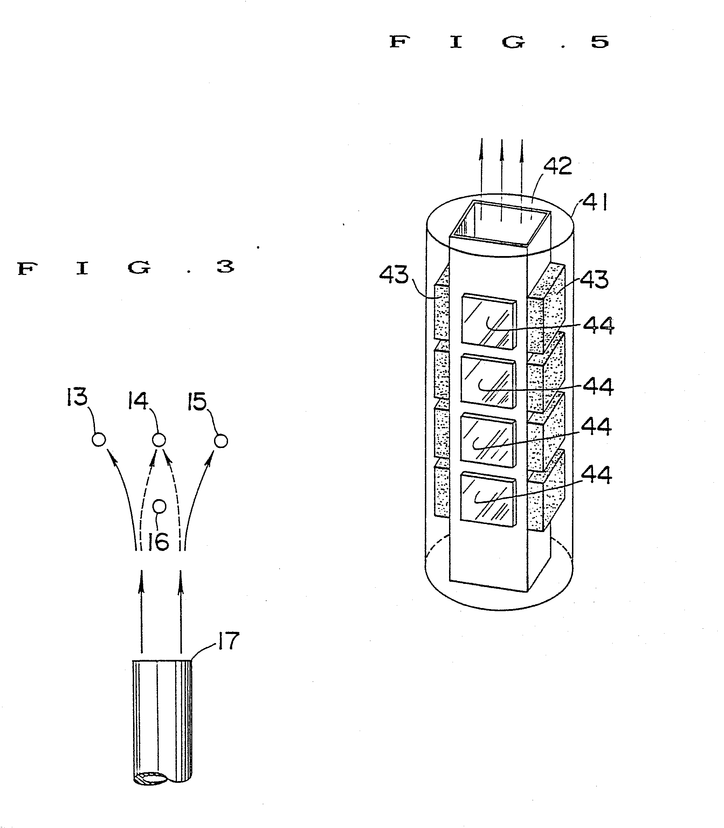

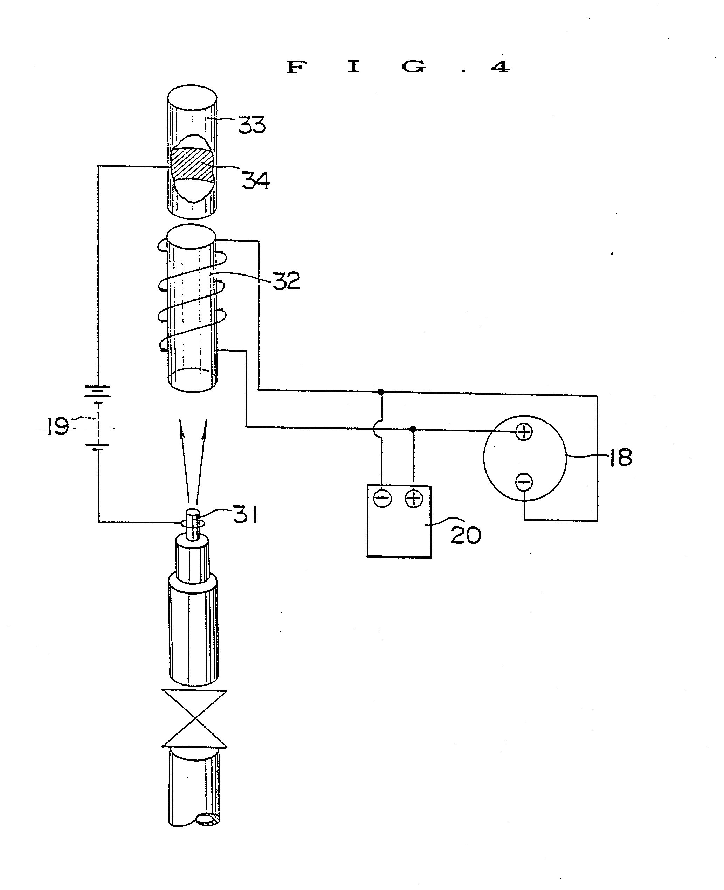

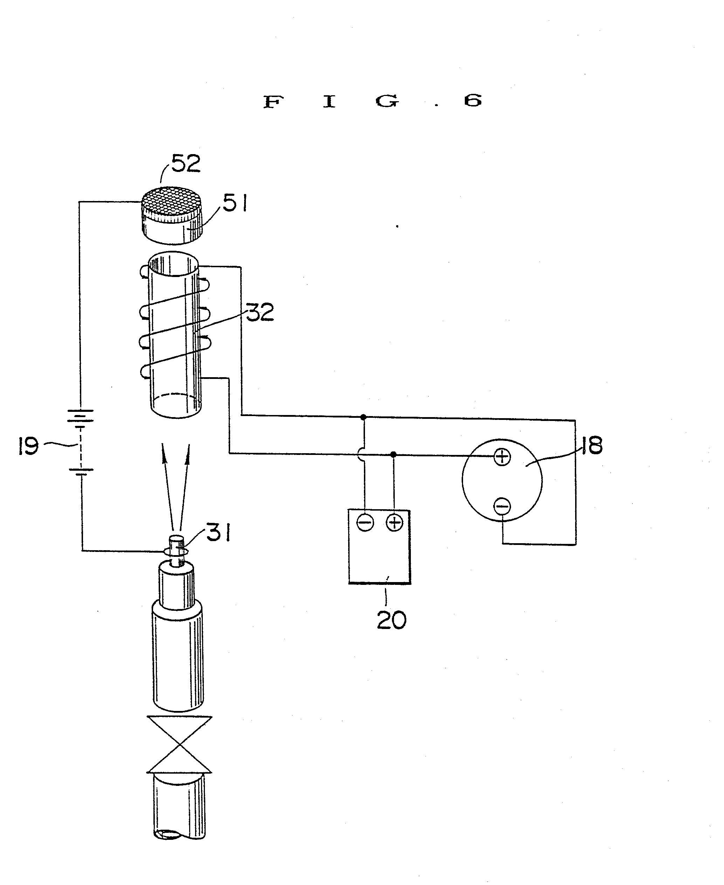

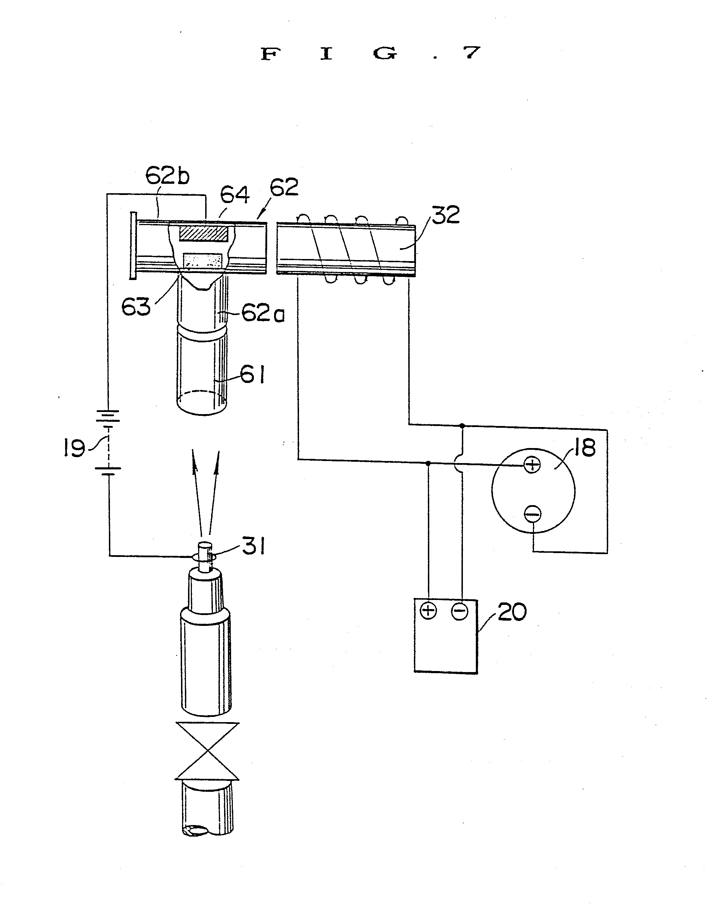

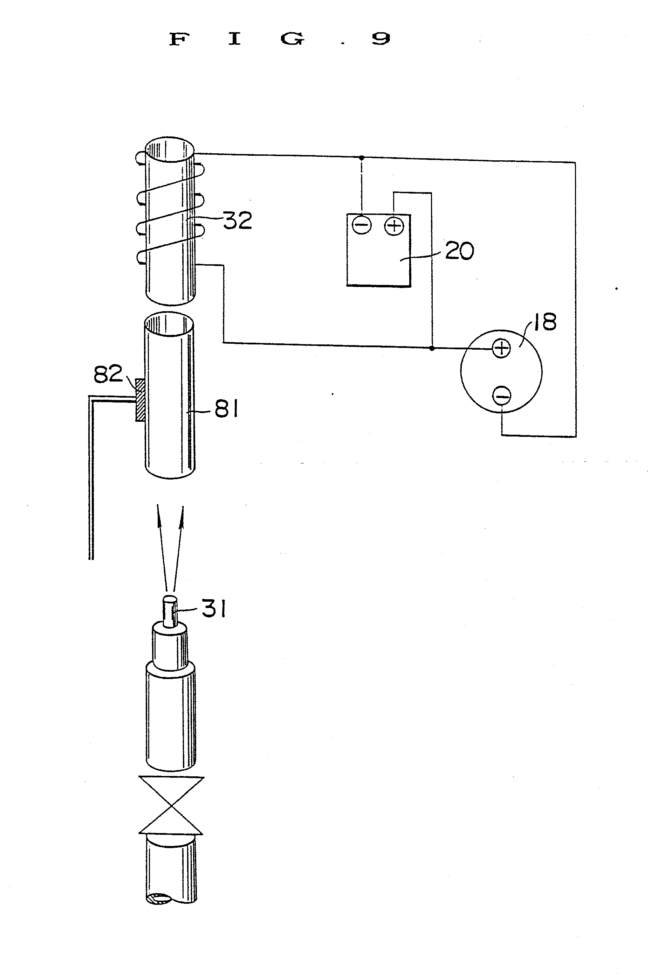

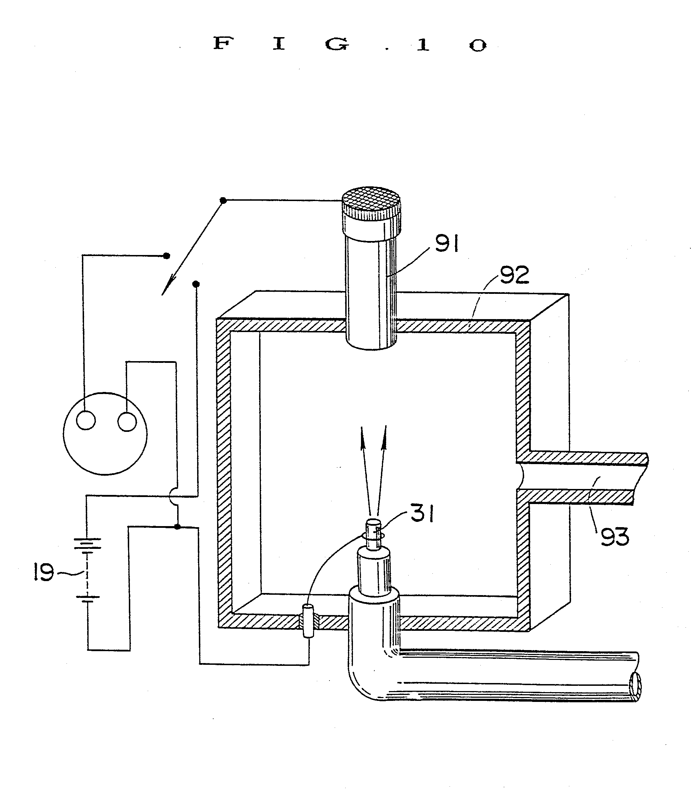

Figure 1 illustrates the basic principles of the working of this invention. Figures 2 and 3 explain the method used in one example of actual application of this invention and the way in which ionized electrons and ions are captured. Figure 4 illustrates a method used in another example of this invention and Figure 5 gives a perspective view of the generator channel used in the same example. Figures 6 through 9 each show illustrations of still other examples for practical application of this invention. Lastly, Figure 10 is a perspective view showing a partial cross section of a device for mixing gases used for producing plasma.

THE BEST MODE FOR CARRYING OUT THE INVENTION TO PRACTICAL USE

Before coming to the details of the make-up of this invention, the applicant's experience which gave him an idea for this invention is briefly given below.

As a radio station inspector of the Radio Regulatory Bureau of the Japanese Government, the applicant has inspected a number of radio stations. One day while boarding a steam boat (of the conventional reciprocating propulsion type using steam as power source) at anchor, he noticed that steam which jetted off the safety valve was contacting an antenna stretched above, and one of his hands happened to touch a conductive part of the circuitry of a radio transmitter for some adjustment action. At this very moment he felt a strong electrical shock. On other occasions, he also experienced that under the same conditions, the radio receiver made noises and the reception of radio signals was temporarily interfered.

Based on the above experience, the applicant attempted to duplicate his experience in experiments using the method illustrated in Fig. 1, as described below:

Two metal poles 1 and 2, each about 22.5 meters high, are put up north and south and about 16 meters apart and, between the metal poles 1 and 2 are two antenna wires 3 and 4 stretched in parallel and one meter apart. Then steam is made to eject from a steam exhaust pipe 5 toward the antenna wires 3 and 4. This experiment obtained the following voltage readings from the oscillographs 6 and 7 which were connected to the antenna wires 3 and 4, respectively. The other terminals of the oscillographs 6 and 7 were earthed. Other conditions given to this experiment: Volume of steam exhaust: 11-20 metric tons/hour; Temperature of steam: 300-400 degrees C; Steam rising speed: More than 6 meters/ second.

(A) Before starting and sfter ending steam ejection:

(a) Insulation between the antenna wire 3 and earth: $\infty$ (Infinite).

(b) Insulation between the antenna wire 4 and

earth: ∞ (Infinite).

(B) While steam is being ejected:

(a) Between the antenna wire 3 and earth: +4 V to -6 V.

(b) Between the antenna wire 4 and earth: +4 V to -6 V.

The oscillograph readings shifted within the above range as if swinging at apace of 2-3 seconds per swing.

Given below next are explantions of several examples of putting this invention into practice, making reference to the respective drawings.

(i) <u>The First Example</u>

Figure 2 illustrates a method of producing plasma. A pair of support poles are put up north and south and 16 meters apart. About 0.5 meters below the top of the support poles are stretched tight three antenna wires 13, 14,and 15 in parallel to each other which are securely affixed to two affixing rods 12. Ceramic insulators are used to insulate the wires 13 through 15 from the affixing rods 12. Furthermore, another antenna wire 16 is stretched about 0.5 meters below and in parallel with the antenna wires 13 - 15, also insulated by ceramic insulators. The anttena wires 13 and 15 are each connected to the plus terminal of a DC power source 19 (6 KV. 100 micro A) and the antenna wire 16 is connected to the minus terminal of the same power source. An electric filed is thus formed both in the space between the antenna wires 13 and 16, and between the antenna wires 15 and 16. Furthermore, about 7.5 meters directly below the antenna wire 16 is the opening 17 of a steam exhaust pipe (not shown in the diagram). An oscillograph 18 is used to detect whether or not plasma is produced. The minus terminal of the oscillograph 18 is connected to the antenna wire 14, while the plus terminal of the oscillograph 18 is connected to the ground line.

Now, before steam was made to eject from the exhaust pipe opening 17, the oscillograph 18 recorded zero volt. On the other hand, when steam of 400 degrees C was exhausted at a speed of 1.5 meters/s, the oscillograph 18 recorded a maximum of -160 V. This situation is further explained using Fig. 3 which is a left side view of Fig. 2. Mention has been made that an electrical field is formed, because of the DC power source 19, in the space between the antenna wires 13 and 16, and between the antenna wire 15 and 16, respectively. Thus the steam which came out of the exhaust opening 17 went up together with the air around it and passed through the natural electric field (about 100V/m) and those artificially produced electric fields. Here, the steam and the air were ionized within those fields. Of the ionized electrons and ions, the electrons were considered to have received, while going up, the following effects in the earth's magnetic fields:

(1) Drift effect due to the rising air flows, toward left in the diagram.

(2) Drift effect toward left in the diagram due to the influence of the electric fields fromed between the antenna wires 16, 13 and 15.

(3) Absorbing action of the plate (antenna wire 16) due to the Lorentz force of the electric field working against the rising force.

Under the influences mentioned in (1) through (3), abouve, many of the electrons were captured by the antenna wires 13 and 15, giving the wires electric load. At the same time collisions, both elastic and inelastic, and excitations with neutral particles took place and part of the electrons were captured by the antenna 14. In addition, when there was a light wind (2-3 meters) blowing from left to right in the diagram to resist the drift effect, the reception of electric charge by the antenna wire 14 increased so much that a value of -320 V was obtained.

The ions, on the other hand, were considered to have received such drift and other effects as are mentioned below in the earth's magnetic field:

(1) Drift effect toward right in the diagram due to the rising gas flows.

(2) Drift effect toward left in the diagram due to the influences of the electric fields formed between the antenna wires 16, 13, and 15.

(3) Absorbing action of the plate (antenna wire) 15 due to the Lorentz force of the electric field working against the rising force.

Under the influences mentioned in (1) through (3), above, ions began moving and gave electric load to the antenna wire 16. At the same time, the ions were considered to have given electrical charge to the support poles 11 in the periphery, too. When there was a wind blowing from left to right in the diagram, the ions received not only the drift effect of (1) and (2), above, but also the force of the wind from left to right, and thus drifted diagonally downward in both (1) and (2), and were considered to have given electric charge to the exhaust opening 17 and the earth.

The fact that a maximum value of -160 V was obtained at the oscillograph 18 shows that at least one of two gases, i.e., steam and air, was ionized while passing through the electric fields.

It is thought that the thermo-molecular movement of water vapor and the high dielectric constant of molecules of water worked jointly with the electric field effect so that repeated inelastic collisions, or a multiplication effect, between electrons and neutral particles effectively took place in electric field, thus enhancing plasma production.

(ii) The Second Example

Given below is the second example of carrying out this invention explaining a method to produce plasma through ionization of a plasma-producing gas consisting of steam and air which is made to flow into an area where electric and magnetic fields are fromed. More specifically, this example explains a plasma producing method which may be applied to MHD generation.

In Fig. 4, No. 31 is a nozzle connected to a boiler (not shown in Fig.4) through which steam is ejected at high speeds. The body of the nozzle 31 is made of metal, and is insulated electrically from the steam pipe by an insulator. No. 32 is a generator channel of cylindrical shape. In the hollow space inside the generator channel 32 are installed magnets and plates, and 15 millimeters above the generator channel 32 is an electric field forming device 33, also of cylindrical shape. Affixed tightly to the inner wall of this device 33 is a sheet of copper 34 which is connected to the plus terminal of a DC power source (6 KV.100 micro A) 19 while the minus terminal of the DC power source 19 is connected to the nozzle 31, so that an elelctric field is formed between the nozzle 31 and the copper sheet 34.

Explanations of the make-up of the generator channel 32 follow Fig. 5: The outer cylinder 41 is made of some insulating material, e.g., vinylchloride.
Placed inside this cylinder is a square-shaped pipe 42 which is made of some insulating material, such as bakelite, for example. This square pipe has, on each of its 2 opposite sides, four magnets 43 aligned vertically with the pole of the inner surface side of one magnet alignment (e.g., N) being opposite to that of the magnet alignment on the opposite side (e.g., S). On each of the remaining two sides (forming a right angle with the magnet-attached sides) are affixed four plates 44 aligned vertically, each plate being insulated from the others. In addition, these plates 44 are connected to each other diagonally as shown in Fig. 4.

Also, the upper ends of the plates 44 of the generator channel 32 are connected to the minus terminals of the measuring instruments, i.e., the oscillograph 18 and the amperementer 20, and the lower ends of the plates 44 are connected to the plus terminals of the instruments 18 and 20, so that the voltage and current generated between the upper-end and the lower-end plates 44 may be measured.

How this experiment model works is explained below: Steam ejects from the nozzle 31 together with the air around it, goes into the generator channel 32 from below and is ionized while going through the electric field formed by the electric field forming device 31, 33. The electrons and ions thus produced are captured in the magnetic field produced by the magnet 43 through the Lorentz force by the plates 44 and are measured by the instruments 18 and 22 as voltages and currents generated.

Table 1 below shows the readings of the instruments 18 and 22 when steam was ejected at three different temperatures.

(Table 1)

| | | | |
|---|---|---|---|
| Steam temperature (Degrees C) | 120 | 140 | 160 |
| Steam pressure (KG/cm2) | 2 | 3.6 | 6.3 |
| Speed of ejected steam (m/s) | 1.5 | 2 | 3 |
| Temperature of plasma-producing gas (Degrees C) | 21 | 21 | 21 |
| Humidity of plasma producing gas (%) | 55 | 55 | 55 |
| Voltage (DC) reading (V) | 20 | 33 | 50 |
| Ampere (DC) reading (Micro A) | 50 | 80 | 100 |

The above experiment demonstrated that the plasma-producing gas consisting of steam and air which flowed into the electric field was ionized.

By way of comparison, Table 2 below shows the readings of the instruments 18 and 20 when only compressed air, instead of steam, was ejected from the nozzle under indentical conditions.

(Table 2)

| | | | |
|---|---|---|---|
| Compressed air temperature (Degrees C) | 120 | 140 | 160 |
| 〃 〃 humidity (%) | 10 | 10 | 10 |
| 〃 〃 (Kg/cm2) | 2 | 3.6 | 6.3 |
| 〃 〃 ejection speed (m/s) | 1.5 | 2 | 3 |
| Temperature of plasma-producing gas (air) (Degrees C) | 21 | 21 | 21 |
| Humidity 〃 〃 〃 〃 (%) | 55 | 55 | 55 |
| Voltage (DC) reading (V) | 0 | 0.001 | 0.001 |
| Ampere (DC) reading (Micro A) | 0 | 0 | 0 |

The above readings show that steam played an important role in the ionization process.

(iii) The Third Example

The third example of putting this invention into practice uses, as shown in Fig. 6, a component 51 (in lieu of the copper sheet affixed inside the cylinder wall in the previous example) to from an electric field. A metal wire netting 52 covers the top of the component 51 which is placed on the upper end of the generator channel 32 as a cap. This wire net cap 52 is connected to the plus terminal of the DC power source 19 so that an electric field is formed right in front of the path through which the plasma-producing gas proceeds. Those components used in the second example as well are numbered the same way and explanations there of are omitted.

Table 3 shows the readings of the instruments 18, 20 when steam was ejected from the nozzle 31 together with the air around it, while Table 4 gives the readings of the instruments 18, 20 when only compressed air was ejected.

(Table 3)

| | | | |
|---|---|---|---|
| Steam temperature (Degrees C) | 120 | 140 | 160 |
| Steam pressure (Kg/cm2) | 2 | 3.6 | 7 |
| Speed of ejected steam (m/s) | 1 - 1.5 | 2 | About 3 |
| Temperature of plasma-producing gas (air) (Degrees C) | 21 | 21 | 21 |
| Humidity 〃 〃 〃 〃 (〃) (%) | 55 | 55 | 55 |
| Voltage (DC) reading (V) | 16 | 38 | 90 |
| Ampere (DC) reading (Micro A) | 46 | 75 | 100 |

(Table 4)

| | | | |
|---|---|---|---|
| Compressed air temperature (Degrees C) | 120 | 140 | 160 |
| 〃 〃 humidity (%) | 10 | 10 | 10 |
| 〃 〃 pressure (Kg/cm2) | 2 | 3.6 | 7 |

| | | | |
|---|---|---|---|
| Ejected compressed air speed (m/s) | 1 - 1.5 | 2 | About 3 |
| Temperature of plasma-producing gas (air) (Degrees C) | 21 | 21 | 21 |
| Humidity 〃 〃 〃 . 〃 (〃) (%) | 55 | 55 | 55 |
| Voltage (DC) reading (V) | 0 | Less than 0.001 | Less than 0.001 |
| Ampere (DC) reading (Micro A) | 0 | 0 | 0 |

The third example of this invention as shown in Table 3 demonstrsted that the voltage readings tended to be higher than in the second example of carring out the invention, while the ampere readings tended to be lower.

This is probably explained by the fact that the cap 52 (which functioned as part of the electric field forming device) was right in front of the path through which plasma-producing gas proceeded, thus strengthening the electric field effect.

Table 4 shows, on the other hand, that there was not much plasma produced when only compressed air was used.

(iv) The Fourth Example

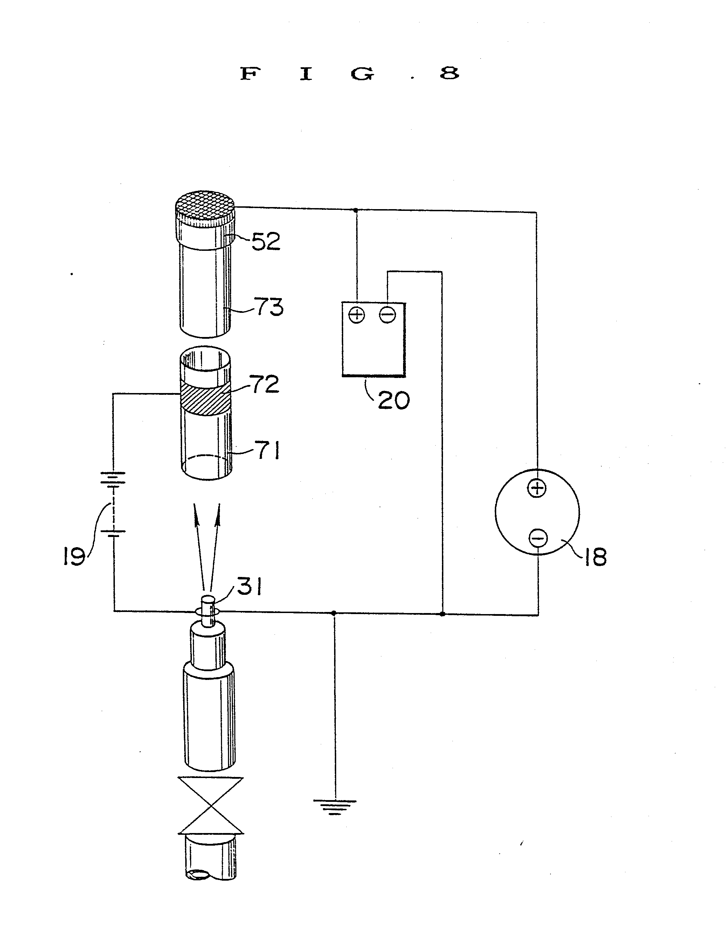

Figure 7 illustrates a model used for the fourth example of applying this invention. Those components used in the previous examples as well are numbered the same way and explanations thereof are omitted.

No. 61 in Figure 7 is a pipe which is installed above the nozzle 31 to effectively capture the steam ejected from the nozzle 31. Immediately above this pipe 61 is installed a T-shaped pipe 62 for forming electric and magnetic fields. As a partial cross sectinal view of this pipe for forming electric and magnetic fields 62 in Fig 7. shows, its lower upright portion 62a has, on its inner wall, two magnets 63 ( aligned vertically) on the front side in the diagram and another set of two vertically aligned magnets 63 on the other side. The pole of the inner side of one set of magnets 63 (e.g.,N) is made to be opposite to that of those on the opposite side (e.g., S).

One end of the horizontal portion 62b of the electromagnetic field forming pipe 62 is closed, while the other end (at right in Figure 7) is open. On the upper side of the inner wall of the horizontal portion 62b is affixed tightly a copper sheet 64 which is connected to the plus terminal of a DC power source 19, and the nozzle 31 is connected to the minus terminal of the DC power source, so that an electric field is formed between the copper sheet 64 and the nozzle 31 which ejects plasma-producing gas. In addition, next to the open end of the pipe for forming electric and magnetic fields 62 and at a distance of about 10 mm from it is installed a generator channel 32.

How this model works is explained below:
Steam which is ejected from the nozzle 31 goes up through the collection pipe 61 together with the air around it. The steam and air are ionized while proceeding through the electric field formed between the copper sheet 64 and the nozzle 31. As the ionized electrons and ions continue to advance and reach the magnetic field formed by the magnets 63, the electrons and most of the ions drift to the right in the diagram affected by the strong electric field and the rising force of the steam.

Thus, while part of the electrons are captured by the copper sheet 64, the remaining electrons and ions drift to the right-supposing the magnets 63 of this side in the diagram form the N pole (the line of magnetic force runs, in this diagram, from the obverse of the paper through the reverse of the paper) - and enter the generator channel 32. Inside the generator channel 32, the electrons and ions are captured, due to the Lorentz force, by the two opposing pole plates respectively and are detected by the instruments 18 and 20 as voltages and currents generated. The readings which were obtained in this experiment are shown in the following Table 5:
(Table 5)

| | | | |
|---|---|---|---|
| Steam temperature (Degrees C) | 120 | 140 | 160 |
| 〃 pressure (Kg/cm2) | 2 | 3.6 | 7 |
| Ejected steam speed (m/s) | 1.5 | 2.5 | 4 |
| Temperature of plasma-producing gas (Degrees C) | 20 | 20 | 20 |
| Humidity of 〃 〃 〃 (%) | 60 | 60 | 60 |
| Voltage (DC) reading (V) | 330 | 800 | 1,000 |
| Ampere (DC) reading (Micro A) | 20 | 30 | 40 |

In comparison with the previous examples, extraordinarily high voltages were generated in this example.

Table 6 below shows the readings which were obtained by the instruments 18 and 20 when compressed air alone, instead of steam, was ejected from the nozzle 31 under the same conditions.

(Table 6)

| | | | |
|---|---|---|---|
| Compressed air temperature (Degrees C) | 120 | 140 | 160 |
| 〃 〃 humidity (%) | 10 | 10 | 10 |
| 〃 〃 pressure (Kg/cm2) | 2 | 3.6 | 7 |
| 〃 〃 ejection speed (m/s) | 1 - 1.5 | 2 - 2.5 | 3 - 4 |
| Temperature of plasma-producing gas (air) (Degrees C) | 20 | 20 | 20 |

| | | | |
|---|---|---|---|
| Humidity 〃 〃 〃 | | | |
| 〃 (〃) (%) | 60 | 60 | 60 |
| Voltage (DC) readings (V) | 0 | Less than 0.01 | Less than 0.01 |
| Ampere (DC) readings (Micro A) | 0 | 0 | 0 |

The above readings clearly show that no active ionization took place when only compressed air was used.

(v) The Fifth Example

Figure 8 illustrates a model to explain a method of producing plasma by making a plasma-producing gas consisting of steam and air flow through an electric field. More specifically, this example offers a model which can be applied to E.G.D. (Electro-Gas-Dynamics) generation.

Those components used in the previous examples as well are numbered the same way. Component No. 71 in the diagram is an electric field forming pipe placed above the nozzle 31. The copper sheet 72 which is tightly affixed to the inner wall of the pipe 71 is connected to the plus terminal of a DC power source (6 KV, 100 micro A) 19, while the minus terminal of the power source 19 is connected to the nozzle 31 so that an electric field is formed between the copper sheet 72 and the nozzle 31. Furthermore, about 15 mm above the electric field forming pipe 71 is installed a receiving pipe 73 of the same diameter and length. The upper end of this receiving pipe 73 is covered by a metal wire net cap 52 similar to that used in the Third Example, and the instruments 18 and 20 are connected between the cap 52 and the nozzle 31.

Now, steam which is ejected from the nozzle 31 flows into the electric field forming pipe 71 together with the air around it, and, while going through the pipe, is ionized, being subjected to an electric field effect and multiplication effect of ionization through collision. Thus, ionized electrons are promptly captured by the copper sheet plate 72. Plus ions, on the other hand, rise because of the strong ejecting force of the plasma-producing gas and neutral particles from below despite the influence of the minus plate nozzle 31 to attract ions toward the nozzle, pass through the center of the pipe 71 due to the repulsive effect from the copper plate 72, and reach the cap 52, where they are captured and measured by the instruments 18 and 20 as electric current genarated.

In other words, those plus ions which have been produced and flowed into the receiving pipe 73, are the only kind of charged praticles existing in the direction of the flow, so that according to Poisson's Law, a strong electric field is formed in such a way as to pull back the plus ions. What pushes them forward despite this resisting force is the power of the flow of mixed neutral particles produced from the water vapor which comes out of the nozzle 31, and thus the work which this force does to the ions is extracted and turns into electrical energy.

This example has demonstrated that electrically charged unipolar particles, i.e., the plus ions in this example, may be produced with ease as in the case of corona disçahrge.

Tables 7 and 8 below show the readings of this example taken by the instruments 18 and 20 respectively using steam and compressed air as the plasma-producing gas:

(Table 7)

| | | | |
|---|---|---|---|
| Steam temperature (Degrees C) | 120 | 140 | 160 |
| Steam pressure (Kg/cm2) | 2 | 3.6 | 7 |
| Speed of ejected steam (m/s) | 1 - 1.5 | 2 over | 3 over |
| Temperature of plasma-producing gas (air) (Degrees C) | 20 | 20 | 20 |
| Humidity 〃 〃 〃 〃 (〃) (%) | 60 | 60 | 60 |
| Voltage (DC) reading (V) | 300-400 | 420-600 | over 1000 |
| Ampere (DC) reading (Micro A) | 60 | 70 | 80-100 |

(Table 8)

| | | | |
|---|---|---|---|
| Compressed air temperature (Deg. C) | 120 | 140 | 160 |
| 〃 〃 humidity (%) | 10 | 10 | 10 |

| | | | |
|---|---|---|---|
| 〃 〃 pressure (Kg/cm2) | 2 | 3.6 | 7 |
| Speed of ejected compressed air (m/s) | 1 - 1.5 | over 2 | over 3 |
| Temperature of plasma-producing gas (air) (Degrees C) | 20 | 20 | 20 |
| Humidity 〃 〃 〃 〃 (〃) (%) | 60 | 60 | 60 |
| Voltage (DC) reading (V) | 0 | less than 0.01 | 0.01 |
| Ampere (DC) reading (Micro A) | 0 | 0 | 0 |

As in the previous examples, compressed air alone used as the plasma-prooducing gas failed to produce plasma in this example, either.

(vi) The Sixth Example

Fig. 9 offers a model to produce plasma by irradiating high energy (e.g., ultraviolet rays - a kind of electro-magnetic waves) onto the plasma-producing gas which is a mixture of steam and air and to let the ionized gas go through a power generation channel. Component No. 81 in the diagram is a plasma-producing pipe on whose wall is affixed a low pressure mercury vapor discharge lamp 82 (for ultra violet ray radiation) in such a way that the lamp 82 irradiates the inside of the pipe with ultra violet rays.

The plasma-producing gas ejected from the nozzle 31 is ionized while going up through the pipe 81. The ionized gas then flows into a power generation channel 32 which is installed about 10 mm above the pipe 81, and the ions are captured there and measured by the instruments 18 and 20 as voltages and currents generated.

Given below are the readings obtained by the instruments 18 and 20 (Table 9) together with those obtained when compressed air alone was used (Table 10).

(Table 9)

| | | | |
|---|---|---|---|
| Steam temperature (Degrees C) | 120 | 140 | 160 |
| 〃 pressure (Kg/cm2) | 2 | 3.6 | 7 |
| Speed of ejected ateam (m/s) | 1 - 1.5 | 2 over | 3 over |
| Temperature of plasma-producing gas (air) (Degrees C) | 20 | 20 | 20 |
| Humidity 〃 〃 〃 | | | |
| 〃 ( 〃 ) (%) | 55 | 55 | 55 |
| Voltage (DC) reading (V) | 0.1 | 0.7 | 0.9 |
| Ampere (DC) reading (micro A) | 0.01 | 0.01-0.02 | 0.02 |

(Table 10)

| | | | |
|---|---|---|---|
| Compressed air tempersature (Deg. C) | 120 | 140 | 160 |
| 〃 〃 humidity (%) | 10 | 10 | 10 |

| | | | |
|---|---|---|---|
| Compressed air pressure (Kg/cm2) | 2 | 3.6 | 7 |
| Speed of ejected compressed air (m/s) | 1 - 1.5 | 2 over | 3 over |
| Temperature of plasma-producing gas (air) (Degrees C) | 20 | 20 | 20 |
| Humidity 〃 〃 〃 〃 (〃) (%) | 55 | 55 | 55 |
| Voltage (DC) reading (V) | 0 | 0 | 0 |
| Ampere (DC) reading (Micro A) | 0 | 0 | 0 |

When compressed air alone was used, no generation of current or voltage was detected.

Figure 10 offers a model in which a gas other than air (e.g., some gas of the alkali metal base) is used together with steam as the plasma producing gas. An air-tight chamber of a certain cubic capacity occupies the space between the plasma-producing pipe 91 and the nozzle 31 to form a gas mixing room 92 into which the above gas is introduced from an outlet 93. Steam ejected from the nozzle 31 is mixed with the above gas and the mixed gas is then made to flow into a plasma producing pipe 91 which is placed above the nozzle 31.

INDUSTRIAL APPLICABILITY

The foregoing has demonstrated that plasma producing method disclosed by this invention makes it possible to produce plasma with ease at relatively low temperatues. It has also been demonstrated that the method offered by this invention makes it possible to control the volume of plasma-producing gas flow with ease so that a desired volume of ionized gas may be obtained without requiring complex equipment. This invention is expected to make a useful contribution to improved efficiency in various plasma utilization areas such as, for example, M.H.d. generation and E.H.D. generation.

CLAIM

A method to produce plasma by introducing a plasma-producing gas consisting of at least steam into an area where at least either an electric field or a of field electromagnetic waves is formed, and by having the said plasma-producing gas ionized in the said area.

FIG. 1

4
3
2
5
1
6
7

F I G . 2

12
12
13
14
15
16
11
11
17
19
18

F I G . 5

42
41
43
43
44
44
44
44

F I G . 3

13
14
15
16
17

F I G . 4

33
34
32
19
18
20
31

0124623

F I G . 6

52
51
32
19
18
31
20

F I G . 7

62b
64
62
32
63
62a
61
19
18
31
20

FIG. 8

52
73
72
71
20
19
31
18

F I G . 9

32
20
18
82
81
31

F I G . 1 0

91
92
31
93
19

0124623

# INTERNATIONAL SEARCH REPORT

International Application No. PCT/JP83/00403

**I. CLASSIFICATION OF SUBJECT MATTER** (if several classification symbols apply, indicate all)[3]

According to International Patent Classification (IPC) or to both National Classification and IPC

Int. Cl.$^3$ H05H 1/24

**II. FIELDS SEARCHED**

Minimum Documentation Searched[4]

| Classification System | Classification Symbols |
|---|---|
| I P C | H05H 1/24, H02K 44/08, G21D 7/02 |

Documentation Searched other than Minimum Documentation to the Extent that such Documents are Included in the Fields Searched[5]

| Documentation | Years |
|---|---|
| Jitsuyo Shinan Koho | 1926 - 1983 |
| Kokai Jitsuyo Shinan Koho | 1971 - 1983 |

**III. DOCUMENTS CONSIDERED TO BE RELEVANT**[14]

| Category* | Citation of Document,[16] with indication, where appropriate, of the relevant passages[17] | Relevant to Claim No.[18] |
|---|---|---|
| A | JP,B2, 57-9298 (Asahi Chemical Industry Co., Ltd.) 20. February. 1982 (20. 02. 82) & US,A, 3,980,907 | |
| A | JP,B2, 56-28000 (Kogyo Gijitsuin-cho) 29. June. 1981 (29. 06. 81) Column 5, lines 37 to 40 | |

* Special categories of cited documents:[15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search[2] | Date of Mailing of this International Search Report[3] |
|---|---|
| January 31, 1983 (31. 01. 83) | February 6, 1984 (06. 02. 84) |
| **International Searching Authority**[1] | **Signature of Authorized Officer**[20] |
| Japanese Patent Office | |